Europäisches Patentamt

European Patent Office

Office européen des brevets

(19)

(11) Veröffentlichungsnummer: **0 123 057**

**A1**

(12)                    ## EUROPÄISCHE PATENTANMELDUNG

(21) Anmeldenummer: 84102028.2

(22) Anmeldetag: 27.02.84

(51) Int. Cl.³: **G 01 N 21/21**

(30) Priorität: 25.02.83 DE 3306589
27.01.84 DE 3402881

(43) Veröffentlichungstag der Anmeldung:
31.10.84 Patentblatt 84/44

(84) Benannte Vertragsstaaten:
IT

(71) Anmelder: Schmidt, Ulrich
Kasinostrasse 54
D-5100 Aachen(DE)

(71) Anmelder: Distl, Richard
Edlingerstrasse 7
D-8000 München 90(DE)

(72) Erfinder: Schmidt, Ulrich
Kasinostrasse 54
D-5100 Aachen(DE)

(72) Erfinder: Distl, Richard
Edlingerstrasse 7
D-8000 München 90(DE)

(74) Vertreter: von Samson-Himmelstjerna, Friedrich R.
Dipl.-Phys.
SAMSON-PATENTANWALTSKANZLEI Donaustrasse 24
D-8000 München 80(DE)

(54) **Mehrstrahl-Messanordnung.**

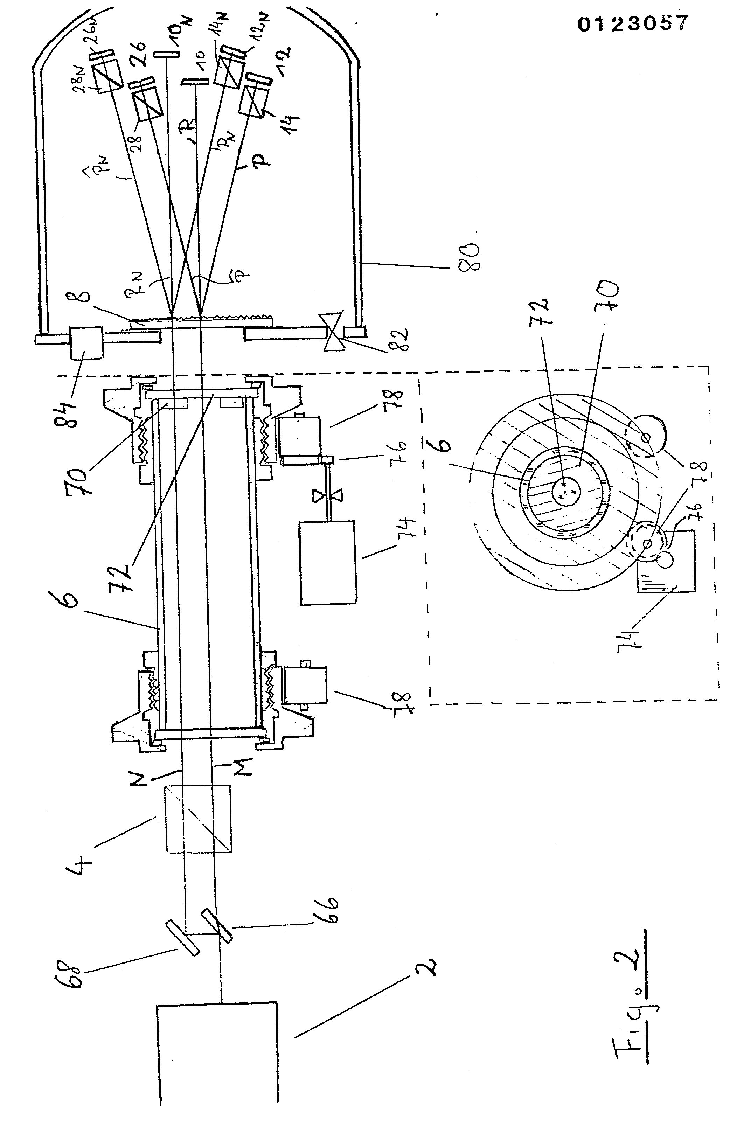

(57) Figur 2 beschreibt eine Mehrstrahl-Meßanordnung zur polarimetrischen Echtzeit-Untersuchung von Proben (6), bei welcher ein linear polarisierter Meßstrahl (M) nach Durchlaufen der Probe (6) mittels eines ersten Strahlteilers (8), vorzugsweise einer Beugungseinrichtung in einen Referenzstrahl (R) und wenigstens einen Prüfstrahl (P) aufgeteilt wird. Die Intensitäten der beiden Teilstrahlen werden mittels Photodioden (10, 12) erfaßt und zueinander ins Verhältnis gesetzt, wobei der einen Photodiode (12) ein Analysator (14) mit ortsfester Durchlaßrichtung vorgeschaltet ist. Der durch die Verhältnisbildung auf die Intensität des Referenzstrahls (R) normierte Intensitätswert des Prüfstrahls (P) wird einer digitalen Datenverarbeitungseinrichtung (24) zugeführt. Zur Verhältnisbildung wird hierbei ein, der digitalen Datenverarbeitungseinrichtung (24) vorgeschalteter, A/D-Wandler (22) verwendet.

Fig. 1

Ulrich SCHMIDT, Aachen, BRD          München, den 25.02.84

Richard DISTL, München, BRD          vS/1/ob

u.Z. 337/3-S84 PCT

## Mehrstrahl-Meßanordnung

### Technisches Gebiet:

Die Erfindung bezieht sich auf eine Mehrstrahl-Meßanordnung zur polarimetrischen Echtzeit-Untersuchung von Proben, bei welcher ein linear polarisierter Meßstrahl nach Durchlaufen der Probe mittels eines ersten Strahlteilers in wenigstens zwei, jeweils den gesamten Strahlquerschnitt des Meßstrahls repräsentierende Teilstrahlen, nämlich einen Referenzstrahl und wenigstens einen Prüfstrahl aufgeteilt wird. Bei dieser Meßanordnung wird die Intensität des Referenzstrahls mittels eines ersten photoempfindlichen Fühlers und die Intensität des Prüfstrahls mittels eines zweiten photoempfindlichen Fühlers erfaßt. Dem zweiten photoempfindlichen Fühler ist hierbei ein Analysator vorgeschaltet, dessen Durchlaßrichtung eine vorgegebene, feste Orientierung hat, die unterschiedlich zu der des Polarisators ist. Die Signalausgänge der beiden photoempfindlichen Fühler sind zur Ermittlung von der Probe zuordenbaren polarimetrischen Größen, insbesondere der optischen Aktivität (z.B. der Drehwert) der Probe, mit den Eingängen einer Meßschaltung verbunden.

## Zugrundeliegender Stand der Technik:

Die vorgenannte Mehrstrahl-Meßanordnung ist aus der deutschen Patentschrift DE 27 24 543 C2 (MÜLLER) bekannt. Bei der bekannten Mehrstrahl-Meßanordnung wird als Strahlteiler ein dielektrisches Teilerelement, nämlich ein teildurchlässiger Spiegel verwendet. Die Teilung des Meßstrahls in einen Referenz- und einen Prüfstrahl erfolgt hierbei demgemäß durch Reflexion und Transmission. Die Verwendung eines derartigen Strahlteilers hat den Nachteil, daß aufgrund der Phasenverschiebung an der teildurchlässig verspiegelten Schicht auffallendes linear polarisiertes Licht hinsichtlich seines Polarisationszustandes geändert, nämlich in elliptisch polarisiertes Licht überführt wird. Die mittels des Analysators erfaßbare Änderung des Polarisationszustandes des Prüfstrahls rührt demnach nicht nur von der optischen Aktivität der Probe sondern auch von der Reflexion am Strahlteiler her. Dies hat einen ersten systematischen Meßfehler zur Folge. Zum anderen ist das Verhältnis von transmittierter zu reflektierter Energie bei einem derartigen Strahlteiler von der Polarisationsrichtung der auftreffenden Strahlung abhängig. Die Polarisationsrichtung des auf den Strahlteiler auftreffenden Meßstrahls ist aber infolge der unbekannten optischen Aktivitäten der Probe undefiniert, andernfalls müßte die Drehung der Polarisationsebene des Meßstrahls nicht erst durch Messung ermittelt werden.

Bei der aus der o.g. DE-PS 27 24 543 bekannten Mehrstrahl-Meßanordnung besteht die Meßschaltung aus einer eingangsseitig angeordneten Differenzschaltung mit nachgeschaltetem Verstärker und einer Anzeige- bzw. Registriereinrichtung. Die Signalausgänge der beiden photoempfindlichen Fühler sind hierbei mit den Eingän-

-3-

gen der Differenzschaltung verbunden. Diese Schaltung hat jedoch den Nachteil, daß das Ausgangssignal der Differenzschaltung nicht nur eine Funktion des (durch die optische Aktivität der Probe hervorgerufenen)Drehwinkels der Polarisationsebene ist, sondern auch eine Funktion der Ausgangsintensität der Lichtquelle. Damit ist grundsätzlich nicht feststellbar, ob eine Änderung des Ausgangssignals der Differenzschaltung auf eine Änderung der Lichtintensität der Lichtquelle oder eine Änderung der optischen Aktivität der Probe zurückzuführen ist.

Insgesamt ist somit der mittels der beschriebenen Mehrstrahl-Meßanordnung ermittelte Meßwert mit mindestens drei systematischen Meßfehlern behaftet.

Die in der genannten Patentschrift beschriebene Mehrstrahl-Meßanordnung hat jedoch den Vorteil, daß die analoge Signalverarbeitung offenbar verzögerungsfrei erfolgt und somit quasi eine Echtzeit-Messung vorliegt. Durch das in der genannten Patentschrift offenbar verwendete Zeigermeßinstrument sind jedoch geringe Meßwertschwankungen infolge der Trägheit des Instruments nicht mehr feststellbar. Insoweit liegt eine gewisse Meßungenauigkeit und eine stark eingeschränkte Echtzeit-Messung vor.
Auch die USA-Patentschrift 3 724 957 (TAMATE et al.) beschreibt eine Meßanordnung zur polarimetrischen Untersuchung von Proben, die eine gewisse Ähnlichkeit mit der aus der vorgenannten deutschen Patentschrift beschriebenen Mehrstrahl-Meßanordnung hat. Die aus der genannten US-Patentschrift bekannte Mehrstrahl-Meßanordnung weist jedoch weder einen Strahlteiler auf, noch arbeitet sie im Echtzeitverfahren. Die Schwierigkeiten der Strahlteilung werden in der genannten US-Patentschrift 3 724 957 dadurch umgangen, daß ein Meßstrahl mit relativ großem Querschnitt die Probenkammer durchläuft und anschließend an zwei unterschiedlichen Stellen des Querschnittes des Meßstrahls zwei Messungen mittels photoempfindlicher Fühler vorgenommen werden. Diese Maßnahme hat den Nachteil, daß die von den beiden photoempfindlichen Fühlern erfaßten Lichtintensitäten nicht miteinander vergleichbar sind, da die ihnen zugeordneten Lichtstrahlen unterschiedliche Bereiche der Probe durchlaufen. Sollen mit der bekannten Meßanordnung beispielsweise fließende Systeme oder Zuckerbrei in der verarbeitenden Industrie untersucht werden, dann treten innerhalb der Probe unregelmäßig verteilte, makroskopische Bereiche unterschiedlicher Trübung, unterschiedlichen Bewegungszustandes und unterschiedlicher Brechung auf. Demgemäß gehen in die Intensität der beiden unterschiedlichen Strahlquerschnitte unterschiedliche Faktoren für die Absorption bei der Bestimmung des Drehwertes ein. Diese Tatsache führt zu einem systematischen Meßfehler. Zum anderen ist besonders bei der Verwendung von relativ zum Strahlquerschnitt großen Detektoren, wie dies für eine wenigstens angenäherte flächenmäßige Integration notwendig und vorgesehen ist, die Meßwertverfälschung durch Einstreuung von Licht aus für die beiden (unterschiedlich großen) Empfänger unterschiedlichen Bereichen nicht vernachläßigbar. Diese Problematik läßt sich auch nicht, wie in der US-Patentschrift beschrieben, durch eine zusätzliche Streuungs-Meßeinrichtung mit weiteren photoempfindlichen Fühlern beseitigen, da diese zwangsläufig nicht an der gleichen Stelle der Probe eingesetzt werden könnte und somit bei der Berücksichtigung dieser Störgröße kaum der wahre Wert erfaßbar ist.

Die US-Patentschrift 3 724 957 lehrt, zur Bestimmung des Drehwertes den Quotienten aus den Intensitäten des Referenzstrahls und des Prüfstrahls zu bilden. Diese Maßnahme hat den Vorteil, daß das Ausgangssignal der entsprechenden Quotientenschaltung lediglich eine Funktion des Drehwertes, insbesondere keine Funktion der Ausgangsenergie der Lichtquelle ist. Denn durch die Quotientenbildung gehen evtl. auftretende Schwankungen der Ausgangsintensität der Lichtquelle nicht in das Meßergebnis ein, weil die Ausgangsintensität der Lichtquelle als Faktor (eines Produktes) sowohl im Zähler als auch im Nenner des Quotienten steht. Die in der genannten US-Patentschrift 3 724 957 beschriebene Quotientenschaltung arbeitet im wesentlichen wie folgt: Die Spannung des photoempfindlichen Fühlers ohne vorgeschalteten Analysator wird über einen Festwiderstand abgegriffen, die Spannung des photoempfindlichen Fühlers mit vorgeschaltetem Analysator über ein als Spannungsteiler geschaltetes Potentiometer. Die Drehwertbestimmung erfolgt dadurch, daß das Differenzsignal der beiden Spannungen als Eingangsspannung für einen Stellmotor verwendet wird. Der Stellmotor führt die Abgriffsklemme des Potentiometers so lange nach, bis die Differenz der Spannungen am Festwiderstand und am Potentiometer gleich Null ist, d.h. das Potentiometer abgeglichen ist. Die Stellung der Abgriffsklemme des Potentiometers in dieser Abgleichstellung ist ein Maß für den Quotienten der Ausgangsströme der beiden photoempfindlichen Fühler. Der Drehwert selbst ist eine nicht lineare Funktion des Quotienten der genannten Ausgangsströme. Wegen der Notwendigkeit eines Abgleichs des Potentiometers vor einer Bestimmung des Drehwertes ist die aus der genannten US-Patentschrift beschriebene Mehrstrahl-Meßanordnung für Echtzeit-Meßverfahren grundsätzlich ungeeignet. Sie hat insoweit die gleichen Nachteile wie herkömmliche Kompensationsmethoden, bei welchen der Analysator so lange nachgeführt wird, bis die Intensitäten des Referenzstrahls und des Prüfstrahls gleich sind. Hinzu kommt, daß diese Meßanordnung zur Untersuchung von Proben, deren optische Aktivität laufend Änderungen unterworfen ist, unbrauchbar ist. Ändert sich nämlich die optische Aktivität der zu untersuchenden Proben schneller, als der Abgleich des Potentiometers (mechanisch durchführbar) ist, dann läßt sich der (der optischen Aktivität) zugeordnete Drehwert überhaupt nicht bestimmen.

Aus der deutschen Offenlegungsschrift 25 13 937 (FRANZ SCHMIDT & HAENSCH) ist eine Meßanordnung zur polarimetrischen Untersuchung der optischen Aktivität mehrerer in der selben Lösung vorliegender Substanzen mittels unterschiedlicher Wellenlängen bekannt. Diese Meßanordnung ist keine Mehrstrahl- sondern eine Einstrahl-Meßanordnung. Sie weist demgemäß auch keinen Strahlteiler auf. Sie eignet sich auch nicht zur Echtzeituntersuchung, da sie nach der bekannten Kompensationsmethode arbeitet, bei welcher der Analysator so lange gedreht wird, bis die Intensität des nach dem Analysator gemessenen Lichtstrahls einen Extremwert erreicht.

Darüber hinaus beschreibt die genannte deutsche Offenlegungsschrift 25 13 937 den Einsatz eines Rechengerätes in Verbindung mit der Meßanordnung. Das Rechengerät dient jedoch nicht zur Berechnung des jeder Substanz zugeordneten Drehwertes. Es dient lediglich der Auswertung der bei den unterschiedlichen Wellenlängen gemessenen Drehwerte sowie der Steuerung der zur Einstrahlung unterschiedlicher Wellenlängen benötigten Filter.

Im übrigen können in der Regel die Einzelkomponenten mehrerer in der selben Probe vorliegender optisch aktiver Komponenten bzw. Substanzen nicht dadurch erfaßt werden, daß an ebenso vielen unterschiedlichen Stellen des Spektrums gemessen wird, wie voneinander unterschiedliche optisch aktive Substanzen vorliegen. Denn in der Regel können Konzentrationen unbekannter unterschiedlicher Substanzen nur unter Ausnutzung des anomalen Cotton-Effektes gemessen werden, d.h. dann, wenn eine Wellenlänge eingestrahlt wird, bei welcher das Spektrum der optischen Rotationsdispersion eine Anomalie (Resonanz) zeigt. Da aber die Substanzen in der Regel vorher nicht bekannt sind, sind in der Regel auch die Wellenlängen, bei denen die unbekannten Substanzen Anomalien zeigen nicht bekannt.

Aus der deutschen Offenlegungsschrift DE 32 12 809 A1 (ZEISS) ist eine Anordnung zur Regelung der Mittenfrequenz einer Laserröhre bekannt. Bei dem bekannten Regelkreis wird ein Laserstrahl durch ein Gitter, vorzugsweise ein Phasen-Transmissionsgitter mit symmetrischem Furchenprofil in einen Haupt- und zwei Nebenstrahlen abgebeugt. Das Phasengitter ist hierbei so ausgelegt, daß der größte Teil der Intensität in der nullten Ordnung liegt. Die beiden Nebenstrahlen liegen in den beiden Maxima $\pm$ erster Ordnung. Deren Intensität wird nach Durchlaufen je einer Analysatorfolie von jeweils einem photoempfindlichen Fühler gemessen. Das Differenzsignal der beiden Photospannungen der photoempfindlichen Fühler wird als Indikator für den jeweiligen Anteil der beiden Polarisationskomponenten des Ausgangsstrahls des Lasers verwendet und zur Stabilisierung der Ausgangsleistung und/oder Wellenlänge des Lasers herangezogen. Eine polarimetrische Untersuchung der optischen Aktivität einer Probe ist mittels der bekannten Regelanordnung nicht vorgesehen und wäre auch sinnvollerweise nicht möglich.

Aus der genannten Druckschrift ist es jedoch bekannt, daß teildurchläßige Spiegel bei einer Strahlteilung polarisierende bzw. depolarisierende Effekte auf das einfallende Licht ausüben; ferner, zur Vermeidung dieses Nachteils, anstelle eines dielektrischen Strahlteilers, beispielsweise also eines teildurchläßigen Spiegels, ein Beugungsgitter zu verwenden.

Offenbarung der Erfindung:

Ausgehend vom vorgenannten Stand der Technik befaßt sich die erfindungsgemäße Lehre mit dem Problem, die eingangs geschilderte und von ihrer Gattung her aus der deutschen Patentschrift 27 24 543 C2 bekannte Mehrstrahl-Meßanordnung unter weitestgehender Beibehaltung und Fortentwicklung ihrer bisherigen Vorteile hinsichtlich ihrer Meßgenauigkeit zu verbessern.

Diese Aufgabe wird dadurch gelöst, daß die eingangs beschriebene gattungsgemäße Mehrstrahl-Meßanordnung in ihrer Meßschaltung jedem photoempfindlichen Fühler je einem nachgeschalteten Kurzzeitspeicher und eine den Kurzzeitspeichern zugeordnete Steuerschaltung aufweist, wobei die Steuerschaltung die Kurzzeitspeicher zur synchronen kurzzeitigen Speicherung der Ausgangssignale der photoempfindlichen Fühler ansteuert. Ferner weist die Meßschaltung eine verzögerungsfrei arbeitende Divisionsschaltung auf, die eingangsseitig mit den Ausgängen der Kurzzeitspeicher und ausgangsseitig mit einer digitalen Datenverarbeitungseinrichtung zur Ausgabe der polarimetrischen Größen verbunden ist. Schließlich weist die Meßschaltung auch wenigstens einen der digitalen Datenverarbeitungseinrichtung vorgeschalteten A/D-Wandler auf.

Die synchrone Speicherung der Ausgangssignale der photoempfindlichen Fühler vor deren Weiterverarbeitung in der Divisionsschaltung hat u.a. den Vorteil, daß sie exakt gleiche Meßbedingungen für den Prüfstrahl und den Referenzstrahl sicherstellt und somit die Meßgenauigkeit erhöht. Die Verarbeitung der beiden Ausgangssignale der photoempfindlichen Fühler in einem Divisionselement hat den Vorteil, daß das Ausgangssignal nur noch eine Funktion der optischen Aktivität der zu untersuchenden Probe, insbesondere keine Funktion der Ausgangsintensität der Lichtquelle ist. Der Einsatz der digitalen Datenverarbeitungseinrichtung ermöglicht insbesondere eine genaue Verarbeitung der Ausgangssignale der vorgeschalteten Elemente in Echtzeit (real time); dem dient auch die Verzögerungsfreiheit der Divisionsschaltung.

Die erfindungsgemäße Lehre geht u.a. von der Überlegung aus, daß sich die Beziehung zwischen den Strahlungsintensitäten vor und nach dem Analysator beispielsweise durch folgende Formel von Malus ausdrücken läßt:

$$A = A_0 \cos^2 \varphi$$

wobei gilt:  $A_0$: Energie des Lichtes vor Analysator

$A$ : Energie des Lichtes nach Analysator

$\varphi$ : Winkel zwischen Polarisationsebene des einfallenden Lichtes und Durch-Durchlassrichtung des Analysators.

Durch Umformen obiger Formel läßt sich nun der Winkel zwischen der Polarisationsebene des einfallenden Lichtes und der Durchlaßrichtung des Analysators bestimmen, falls $A_0$ und $A$ bekannt sind. Vorstehende Gleichung nach $\varphi$ aufgelöst lautet:

$$\varphi = \arccos \sqrt{\frac{A}{A_0}}$$

Gemäß obiger Beziehung wird mittels der beiden photoempfindlichen Fühler mit nachgeschalteter Divisionsschaltung zunächst das Verhältnis von $A$ zu $A_0$, oder anders ausgedrückt, der auf die Intensität des Referenzstrahls normierte Wert der Intensität des Prüfstrahls ermit-telt. Der so ermittelte normierte Wert wird dann der digitalen Datenverarbeitungseinrichtung zur weiteren Auswertung zugeführt, so daß das Ergebnis im Echtzeitverfahren unmittelbar in digitaler Form zur Verfügung steht.

Voraussetzung hierbei ist, daß die Intensitäten der beiden Teilstrahlen gleich oder zumindest einander direkt proportional sind.

Die Verwendung von Analogspeichern, z.B. sample & hold-Speichern, als Kurzzeitspeicher eignet sich in besonderem Maße dazu, die von den beiden photoempfindlichen Fühlern ausgehenden Ausgangssignale exakt zum gleichen Zeitpunkt festzuhalten.

Vorzugsweise ist der A/D-Wandler zugleich auch als Divisionsschaltung für die Ausgangssignale der Kurzzeitspeicher geschaltet. Hierzu ist der Ausgang des dem Referenzstrahl zugeordneten Kurzzeitspeichers mit dem Referenzeingang und der Ausgang des dem Prüfstrahl zugeordneten Kurzzeitspeichers mit dem Meßeingang des A/D-Wandlers verbunden. Da der A/D-Wandler den am Meßeingang anstehenden Wert im Verhältnis zu dem am Referenzeingang anstehenden Wert digitalisiert, d.h. ihn auf diesen normiert, arbeitet der so beschaltete A/D-Wandler auch als Quotientenschaltung - neben seiner Funktion der Digitalisierung. Diese Lösung hat den Vorteil, daß es neben dem A/D-Wandler einer zusätzlichen Divisionsschaltung nicht bedarf. Demgemäß wird hierdurch der bauliche Aufwand reduziert und gleichzeitig die Meßgenauigkeit erhöht, da in der Regel jedes zusätzliche Element innerhalb einer Meßschaltung die Gefahr von Meßfehlern birgt.

Die vorzugsweise vorgenommene Ausbildung der digitalen Datenverarbeitungseinrichtung als parallel arbeitendes Multiprozessorsystem dient auch der Meßgenauigkeit im Echtzeitverfahren. Denn durch die mehreren parallel arbeitenden Mikroprozessoren wird der Datendurchsatz wesentlich erhöht, wodurch grundsätzlich auch kurzzeitige Änderungen der optischen Eigenschaften der Probe meßtechnisch exakt ermittelt werden können. Hierbei übernimmt vorzugsweise je ein Mikroprozessor genau eine Funktionseinheit, beispielsweise die Steuerung der Datenerfassung, die Berechnung der der Probe zuordenbaren optischen Größen, sowie die Aufbereitung der erhaltenen Ergebnisse für die Ausgabe. Hierzu spezialisierte Mikroprozessoren sind auf dem Markt erhältlich.

Durch die bevorzugte Verwendung einer Beugungseinrichtung als Strahlteiler sind die in jedem Beugungsmaximum enthaltenen optischen Informationen für den gesamten Strahlquerschnitt (des den Probenraum durchlaufenden) Meßstrahls repräsentativ.                    Da eine Beugungseinrichtung in der Regel mehr als zwei Beugungsmaxima liefert, kann hierdurch der Meßstrahl in einen Referenzstrahl und mehrere Prüfstrahlen aufgeteilt werden. Wird als Beugungseinrichtung eine Transmissions-Beugungseinrichtung verwendet, dann liefert jedes Beugungsmaximum einen repräsentativen Querschnitt des gesamten Meßstrahls, und zwar unabhängig von der Polarisationsrichtung des Meßstrahls und ohne depolarisierenden Einfluß auf den Meßstrahl. Hierauf wurde bereits im Zusammenhang mit der deutschen Offenlegungsschrift 32 12 809 A1 eingegangen.

Vorzugsweise wird als Beugungselement ein Gitter, insbesondere ein Strichgitter oder ein Replika davon verwendet. Besonders bevorzugt ist hierbei ein Phasengitter, insbesondere ein holographisches Phasengitter, das in einer besonders bevorzugten Ausführungsform auch noch abbildende Eigenschaften aufweist. Bevorzugt ist hierbei das Gitter derart zum Meßstrahl angeordnet, daß das Furchenprofil des Gitters symmetrisch zum Meßstrahl liegt. Hierdurch wird in besonders wirksamer Weise ein depolarisierender Effekt des Strahlteilers auf den Meßstrahl unterbunden.

Ein angenähert gleiches Signal-Rausch-Verhältnis für den Referenzstrahl und den Meßstrahl wird vorzugsweise dadurch erreicht, daß als Strahlteiler eine Beugungseinrichtung verwendet wird, welche die Energie der gebeugten Strahlung im wesentlichen auf die Maxima der nullten und ± ersten Ordnung konzentriert. Auch hierdurch wird die Meßgenauigkeit erhöht.

Demgemäß wird bevorzugt der eine photoempfindliche Fühler im Beugungsmaximum plus 1.ter Ordnung und der andere photoempfindliche Fühler im Beugungsmaximum minus 1.ter Ordnung angeordnet. Hierdurch wird sichergestellt, daß dem photoempfindlichen Fühler ohne Analysator die gleiche Intensität zugeführt wird wie dem (dem anderen Fühler zugeordneten) Analysator.

Die vorbeschriebene erfindungsgemäße Ausgestaltung der Mehrstrahl-Meßanordnung eröffnet grundsätzlich einen Meßbereich, der dem Betrage nach maximal 90 Winkelgrade umfaßt. Hierbei wird der Analysator vorzugsweise derart angeordnet, daß dessen Durchlaßrichtung im Winkel von 45 Grad zu der des Polarisators steht. Aufgrund dieser Vordrehung ergibt sich ein gleichmäßiger Wertbereich von 45 Winkelgraden für links- und rechtsdrehende Substanzen.

Grundsätzlich ermöglicht die erfindungsgemäße Mehrstrahl-Meßanordnung auch eine Erweiterung des Meßbereiches auf einen Wertebereich von ± 90 Winkelgraden. Um auch hierbei eine hohe Meßgenauigkeit sicherzustellen, teilt der Strahlteiler, im folgenden auch erster Strahlteiler genannt, den Meßstrahl in wenigstens drei, jeweils den gesamten Strahlquerschnitt des Meßstrahls repräsentierende Teilstrahlen auf, nämlich den bereits genannten Referenzstrahl, den bereits genannten Prüfstrahl, im folgenden erster Prüfstrahl genannt, und einen zweiten Prüfstrahl. Im Strahlengang des zweiten Prüfstrahls ist ebenfalls ein photoempfindlicher Fühler, im folgender dritter photoempfindlicher Fühler genannt, mit vorgeschaltetem Analysator angeordnet. Die den beiden photoempfindlichen Fühlern zugeordneten Analysatoren haben untereinander unterschiedliche, jedoch fest vorgegebene Durchlaßrichtungen. Auch dem dritten photoempfindlichen Fühler ist ein Kurzzeitspeicher nachgeschaltet, wobei die bereits genannte Steuerschaltung zur Steuerung der Kurzzeitspeicher, im folgenden erste Steuerschaltung genannt, nunmehr auch zur synchronen kurzzeitigen Speicherung der Ausgangssignale aller drei photoempfindlichen Fühler ausgelegt ist. Ferner sind bei dieser bevorzugten Ausführungsform den Kurzzeitspeichern die bereits genannte Divisionsschaltung oder zwei Divisionsschaltungen derart nachgeschaltet, daß mit ihnen das Verhältnis von einem der (in den) den Prüfstrahlen zugeordneten (Kurzzeitspeichern gespeicherten) Werte zu dem gespeicherten Referenzwert (das ist der Wert, der in dem dem Referenzspeicher zugeordneten Kurzzeitspeicher gespeichert ist) gebildet werden kann. Zusätzlich weist diese bevorzugte Ausführungsform der Mehrstrahl-Meßanordnung eine zweite Steuerschaltung auf, mittels welcher einer der beiden den Prüfstrahlen zugeordneten Kurzzeitspeicher wahlweise angesteuert werden kann. Zusätzlich ist mittels der genannten zweiten Steuerschaltung der Ausgangswert des angewählten Kurzzeitspeichers an die digitale Datenverarbeitungseinrichtung durchschaltbar, jedoch erst nach einer Normierung dieses Ausgangswertes auf die gespeicherte Intensität des Referenzstrahls. Diese Normierung kann dadurch durchgeführt werden, daß der Wert der Intensität des Prüfstrahls durch den Wert der Intensität des Referenzstrahls geteilt wird.

Zur Gewährleistung eindeutiger Meßergebnisse weist die zweite Steuerschaltung vorzugsweise wenigstens eine Vergleichsstufe und eine mit deren Ausgang verbundene steuerbare Schalteinrichtung auf. Die Vergleichsstufe ist hierbei derart ausgelegt, daß sie die (im Kurzzeitspeicher gespeicherten) Intensitäten der Prüfstrahlen nach deren Normierung auf die (gespeicherte) Intensität des Referenzstrahls, z.B. durch die genannte Divisionsschaltung, mit einem vorgegebenen oberen Intensitätswert und einem vorgegebenen unteren Intensitätswert vergleicht. Die vorgegebenen oberen und unteren Intensitätswerte liegen hierbei innerhalb des Intervalls von 0 bis 1, wobei die Werte 0 und 1 nicht angenommen werden.

In Weiterbildung der vorstehenden Ausführungsform der erfindungsgemäßen Mehrstrahl-Meßanordnung sind die Analysatoren so angeordnet, daß die Durchlaßrichtung des einen Analysators einen Winkel von 22,5 Winkelgraden zur Durchlaßrichtung des Polarisators und die Durchlaßrichtung des anderen Analysators einen Winkel von 45 Winkelgraden zur Durchlaßrichtung des erstgenannten Analysators einschließt. In diesem Fall ist der vorgegebene obere Intensitätswert gleich $\cos^2 22,5°$ und der untere Intensitätswert gleich $1- \cos^2 22,5°$.

Zur Erweiterung des Meßbereichs von dem Betrage nach mehr als 180 Winkelgraden, insbesondere mehr als 360 Winkelgraden und Gewährleistung eindeutiger exakter Meßergebnisse in diesem weiten Meßbereich ist vorzugsweise vor der Probe ein zweiter Strahlteiler zur Auskopplung wenigstens eines Nebenstrahls aus dem bereits genannten Meßstrahl angeordnet. Der oder die Nebenstrahl(en) durchlaufen hierbei ebenfalls die Probe, wobei der Meßstrahl und sämtliche Nebenstrahlen in der Probe unterschiedliche Weglängen zurücklegen. Auch die Nebenstrahlen werden - wie der Meßstrahl - vom ersten Strahlteiler in jeweils einen Referenzstrahl und wenigstens einen Prüfstrahl aufgeteilt. Auch in den Strahlengängen der Referenz- und Prüfstrahlen des oder der Nebenstrahlen sind photoempfindliche Fühler angeordnet. Auch diesen Fühlern sind jeweils Kurzzeitspeicher nachgeschaltet. Zur Auswertung der mittels dieser Mehrstrahlen-Meßanordnung erfaßten Meßgrößen ist die digitale Datenverarbeitungseinrichtung in diesem Fall auch zur Berechnung des (oder der) dem (oder den) Nebenstrahl(en) zugeordneten Drehwert(en) und Verknüpfung der somit gewonnenen Daten mit den dem Meßstrahl zugeordneten Drehwert ausgelegt.

Eine exakt arbeitende Echtzeit-Meßanordnung ist insbesondere bei der Analyse kinetischer Prozesse von Vorteil. Dabei ist es wesentlich, einen Zeitmaßstab vorzusehen, mittels dessen eine exakte Zuordnung von Meßwerten und Meßzeitpunkten möglich ist. Hierzu ist eine Echtzeituhr in der Datenverarbeitungseinrichtung eingebunden, die insbesondere die zeitrelevanten Prozesse der Datenerfassung koordiniert.

Bei einer weiteren bevorzugten Ausführungsform ist vor dem A/D-Wandler ein in seiner Verstärkung programmierbarer Instrumentenverstärker zur Erhöhung der Meßgenauigkeit vorgesehen. Hierdurch kann der Digitalisierungsbereich des A/D-Wandlers entsprechend den Probenextinktionen verändert werden. Diese Maßnahme ist insbesondere bei hohen Probenextinktionen von Vorteil.

Wegen ihrer Verarbeitung der Meßergebnisse in Echtzeit, ihres weiten Meßbereiches und ihrer hohen Konstanz der Meßergebnisse eignet sich die erfindungsgemäße Mehrstrahl-Meßanordnung insbesondere zur indu-

-16-

striellen Prozeßsteuerung bei der Herstellung und/oder Weiterverarbeitung von optisch aktiven Substanzen. Hierzu weist vorzugsweise die Mehrstrahl-Meßanordnung eine Schnittstelle auf, mit der eine Rechner-Rechner-Kopplung aufgebaut werden kann (beispielsweise ein sog. LAN-Interface (Local Area Network). Hierdurch ist eine Eingliederung der erfindungsgemäßen Mehrstrahl-Meßanordnung in einen Rechnerverbund mit externen Datenverarbeitungsanlagen erreichbar.

Zur Dokumentation der Meßergebnisse ist vorzugsweise ein Anschluß für einen Meßwertdrucker und/oder Plotter vorgesehen. Diese Maßnahme ist von Vorteil für eine spätere Auswertung der Meßergebnisse. Hierdurch können insbesondere Änderungen der optischen Größen der zu untersuchenden Probe in Abhängigkeit von der Zeit graphisch dargestellt werden.

Gemäß einer weiteren bevorzugten Ausführungsform der Mehrstrahl-Meßanordnung ist als Lichtquelle ein Gaslaser vorgesehen. Der Einsatz eines Lasers erlaubt es, in Verbindung mit dem erfindungsgemäßen Meßverfahren auch kleinste Probenmengen zu analysieren. Diese Eigenschaft wird insbesondere in der Enzymforschung sowie bei der Untersuchung von Blut gefordert. Aufgrund der geringen Divergenz der Laserstrahlung lassen sich auch extrem lange Küvetten durchleuchten, ohne daß hierbei die Gefahr von polarisierenden Wandungsreflexen besteht. Diese Maßnahme ermöglicht somit eine Erhöhung der Meßgenauigkeit bei geringsten Drehwerten der gesamten Probe. Vorzugsweise wird man einen He-Ne-Laser einsetzen, wenn eine relativ hohe Lichtleistung, z.B. für eine Untersuchung dunkler Zuckersäfte bei geringem Aufwand gefordert wird. Hohe Dauerstrichleistung und spektrale Abstimmbarkeit - letzteres durch Einsatz eines Farbstoff-Vorsatzes - bietet ein Argonlaser. Dabei ist ein Adapter derart vorgesehen, daß ein modulartiger Aufbau an alle handelsüblichen Argonlaser angeschlossen werden kann. Die erfindungsgemäße Mehrstrahl-Meßanordnung läßt sich insbesondere wegen ihres geringen apparativen Aufwandes als kostengünstiges Präzisionspolarimeter auf kleinstem Raum realisieren, beispielsweise als Taschenpolarimeter für Diabetiker. In diesem Fall ist der Einsatz eines Halbleiter-Lasers als Lichtquelle besonders vorteilhaft. Der Einsatz einer Laserdiode als Lichtquelle bietet auch Vorteile bei der Analyse von Stoffen mit niedriger Absorption im Infrarotbereich.

Um die eingangs im Zusammenhang mit der deutschen Offenlegungsschrift 25 13 937 geschilderten Nachteile bei der Untersuchung von Stoffgemischen mittels mehrerer fest vorgegebener Wellenlängen zu vermeiden, insbesondere also genaue und aussagekräftige Meßergebnisse im Echtzeitverfahren zu erzielen, ist gemäß einer weiteren bevorzugten Ausführungsform vorgesehen, als Lichtquelle für den Meßstrahl eine Weißlichtquelle mit nachgeschaltetem akusto-optisch abstimmbaren Filter zu verwenden. Diese Maßnahme erlaubt eine spektral aufgelöste Erfassung polarimetrischer und/oder photometrischer Größen. Da eine derartige Meßeinrichtung eine Durchstimmdauer (Sweepdauer) über den gesamten sichtbaren Spektralbereich von wenigen Millisekunden bei einer Subnanometerauflösung erlaubt, wird es hierdurch möglich, transiente Ereignisse dokumentarisch zu analysieren, die sich in der Veränderung des Spektrums der optischen Rotationsdispersion bzw. des photometrischen Spektrums zeigen. Zwar sind akusto-optisch abstimmbare Filter an sich bekannt und auch auf dem Markt erhältlich. Deren Einsatz in Verbindung mit Polarimetern, insbesondere Mehrstrahl-Polarimetern ist jedoch noch nicht vorgeschlagen worden.

0123057

Um Parameter, die die ·Funktion des akusto -optischen Filters bestimmen, für den jeweiligen Anwender frei einstellbar zu gestalten, ist der Steuereingang des akusto -optisch abstimmbaren Filters vorzugsweise mit einem Steuerausgang der digitalen Datenverarbeitungseinrichtung verbunden.

Eine weitere Erhöhung der Meßgenauigkeit wird dadurch erzielt, daß zur Steuerung der Temperatur wenigstens der Probe in der Mehrstrahl-Meßanordnung ein oder mehrere Peltierelemente vorgesehen sind, wobei die Peltierelemente insbesondere über eine Steuerleitung mit der digitalen Datenverarbeitungeinrichtung verbunden sind. Bekanntlich ist nämlich die Drehung der Polarisationsebene nicht nur von der Wellenlänge (Rotationsdispersion) sondern auch von der Temperatur der durchstrahlten Probe abhängig.

Gegenüber der herkömmlichen Wassermantelkühlung hat diese Maßnahme den Vorteil kürzerer Ansprechzeit und höherer Genauigkeit der Temperaturregelung. Mittels einer Kaskadierung der Peltierelemente können Temperaturen von minus 80°C erreicht werden - ein Wert, der mittels Wassermantelkühlung nicht erreichbar ist -, wodurch auch die Untersuchung von Tieftemperaturreaktionen möglich wird.

Liegen hochkonzentrierte Lösungen bzw. darin enthaltene makroskopische Partikel vor, dann treten speziell bei der Analyse von Langzeitvorgängen gravitationsbedingte Entmischungserscheinungen auf, die zu schwer interpretierbaren Ergebnissen führen können. In meßtechnischer Hinsicht ließe sich die Problematik nur durch eine integrale Messung über den gesamten Probenquerschnitt beheben. Diese Maßnahme beinhaltet jedoch systematische Meßfehler, da damit unvermeidlich auftretende polarisierende Wandungsreflexe das Meßergebnis nicht vorhersehbar verfälschen würden. Die durch die vorstehenden Bedingungen hervorgerufene Meßungenauigkeit läßt sich vorzugsweise dadurch beheben, daß eine Einrichtung zur Rotation der Probenkammer um die optische Achse vorgesehen ist, vorzugsweise mit einstellbarer Umdrehungsgeschwindigkeit.

Eine weitere Erhöhung der Meßgenauigkeit wird dadurch erzielt, daß gemäß einer bevorzugten Ausführungsform der erste Strahlteiler, der oder die Analysatoren und die photoempfindlichen Fühler in einem evakuierbaren Isolierbehälter eingeschlossen sind. Dadurch lassen sich, insbesondere bei Präzisionsmessungen, störende Einflüsse durch in Luft befindliche Schwebeteilchen ausschließen. Die damit in dem Isolierbehälter geschaffenen Reinst-Raumbedingungen erlauben den Einsatz von photoempfindlichen Fühlern, ohne Passivierung. Hierdurch werden die sonst durch die Passivierung auftretenden Rückreflexionen sowie eine mögliche Vektorempfindlichkeit, d.h. eine polarisationsrichtungsabhängige Durchlässigkeit für die Lichtwelle, verhindert.

Die Erfindung umfaßt auch eine Mehrstrahl-Meßanordnung der einleitend beschriebenen gattungsgemäßen Art, die sich dadurch auszeichnet, daß der Strahlteiler eine Beugungseinrichtung ist. Diese Maßnahme schafft bereits für sich allein eine erhebliche Steigerung der Meßgenauigkeit, und zwar unabhängig davon, ob die Meßanordnung im Echtzeitbetrieb arbeitet oder nicht.

Die Erfindung umfaßt auch eine Mehrstrahl-Meßanordnung der einleitend beschriebenen Gattung, die zur Erweitung des Meßbereiches unter Beibehaltung exakter Meßwerte einen ersten Strahlteiler aufweist, welcher den Meßstrahl in wenigstens drei, jeweils den gesamten Strahlquerschnitt repräsentierende Teilstrahlen aufteilt, nämlich einen Referenzstrahl, einen ersten und einen zweiten Prüfstrahl. Auch im Strahlengang des zweiten Prüfstrahls ist hierbei ein photoempfindlicher Fühler mit einem vorgeschalteten Analysator angeordnet, wobei beide Analysatoren untereinander unterschiedliche, feste vorgegebene Durchlaßrichtungen haben.

Zur bequemen Verwendung der Mehrstrahl-Meßanordnung für rein photometrische Zwecke weist die Mehrstrahl-Meßanordnung eine Einrichtung zur wahlweisen Direktverbindung einer Konstantspannungsquelle mit dem Referenzeingang des A/D-Wandlers und des Ausgangs des dem Referenzstrahl zugeordneten Fühlers mit dem Meßeingang des A/D-Wandlers auf. Zusätzlich ermöglicht diese Einrichtung die Ausblendung der übrigen Signale vom Meßeingang des A/D-Wandlers. Hinsichtlich seiner Meßgenauigkeit hat die so erhältliche photometrische Meßanordnung die gleichen Vorteile wie die polarimetrische Meßanordnung.

Kurze Beschreibung der Zeichnungen:

In den Zeichnungen zeigen:
—

Fig. 1    eine stark vereinfachte, schematische Darstellung eines ersten Ausführungsbeispiels;

Fig. 2    ein weiteres Ausführungsbeispiel der Erfindung;

Fig. 3a und 3b    Graphen zur Erläuterung des von der Meß-Anordnung durchgeführten Meßverfahrens;

Fig. 4    ein Ausführungsbeispiel für einen analogen Schaltungsteil der Meßschaltung;

Fig. 5    ein Ausführungsbeispiel für eine digitale Datenverarbeitungseinrichtung;

Fig. 6    eine Skizze zur Erläuterung von Mehrdeutigkeiten der Meßwerte;

Fig. 7    ein Ausführungsbeispiel zur Temperierung der Probenkammer.

Wege zur Ausführung der Erfindung:

In sämtlichen Figuren werden für funktionell gleiche Teile gleiche Bezugsziffern bzw. -symbole verwendet.

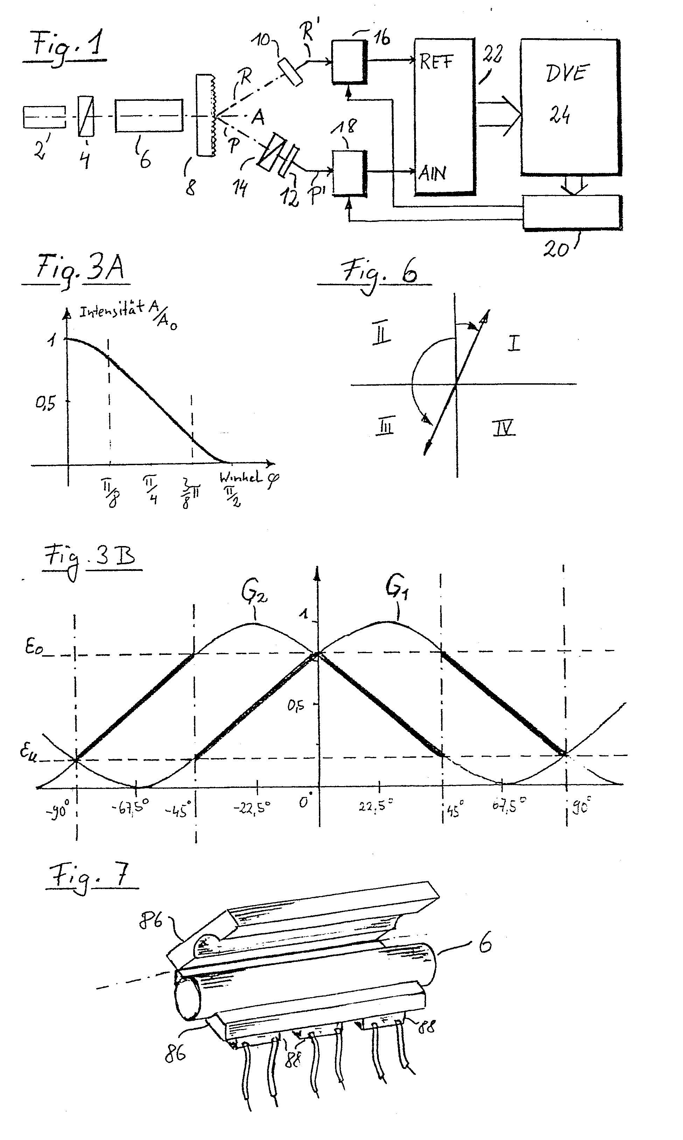

In Figur 1 ist ein erstes Ausführungsbeispiel der Erfindung in vereinfachter und stark schematisierter Form dargestellt. Gemäß dem dargestellten Ausführungsbeispiel sind nacheinander auf einer optischen Achse A ein He-Ne-Laser als Lichtquelle 2, welcher einen Meßstrahl M aussendet, sowie ein Polarisator 4, eine Probenkammer 6 mit darin enthaltener zu analysierender Probe und ein Replika eines holographisch hergestellten Phasen-Transmissions-Gitters 8 angeordnet. Der Meßstrahl wird vom Gitter 8 in zwei Teilstrahlen, nämlich einen Referenzstrahl R und einen Prüfstrahl P aufgeteilt. Die beiden Teilstrahlen sind den Beugungsmaxima ± erster Ordnung zugeordnet. Im dem Referenzstrahl R zugeordneten Beugungsmaximum ist eine erste Photodiode, im folgenden Referenz-Photodiode 10 genannt angeordnet; in dem dem Prüfstrahl P zugeordneten Beugungsmaximum eine zweite Photodiode, im folgenden Prüf-Photodiode 12 genannt. Der Prüf-Photodiode 12 ist ein Analysator 14 vorgeschaltet. Die Durchlaßrichtung des Analysators 14 hat eine vorgegebene, feststehende Orientierung zu der des Polarisators 4. Das Ausgangssignal der Referenz-Photodiode 10, im folgenden Referenzsignal R' genannt, wird dem Eingang eines analogen Kurzzeitspeichers, hier einer sample & hold-Schaltung, im folgenden Referenz-Kurzzeitspeicher 16 genannt, zugeführt. In gleicher Weise wird das Ausgangssignal P' der Prüf-Photodiode 12 dem Eingang eines weiteren analogen Kurzzeitspeichers, hier ebenfalls einer sample & hold-Schaltung, im folgenden Prüf-Kurzzeitspeicher 18 genannt, zugeführt. Zur synchronen Speicherung der Ausgangssignale R' und P' der beiden Photodioden 10 und 12 werden die beiden Kurzzeitspeicher 16 und 18 synchron von einer Steuerschaltung, im folgenden erste Steuerschaltung 20 genannt, angesteuert.

Der Ausgang des Referenz-Kurzzeitspeichers 16 ist mit dem Referenzeingang REF eines Analog/Digital-Wandlers, im folgenden A/D-Wandler 22 genannt, verbunden. Der Ausgang des Prüf-Kurzzeitspeichers 18 ist mit dem Meßeingang AIN des A/D-Wandlers 22 verbunden. Da hierbei das am Meßeingang AIN anstehende Meßsignal stets so digitalisiert wird, daß dessen Digitalwert gleich dem Verhältnis von Meßsignal zu Referenzsignal ist, stellt der A/D-Wandler 22 gleichzeitig eine Divisionsschaltung dar. Das Ausgangssignal des A/D-Wandlers 22 ist demzufolge der digitalisierte Quotient aus Meßsignal und Referenzsignal. Mit anderen Worten ausgedrückt, wird im A/D-Wandler 22 eine Normierung des Meßsignals auf das Referenzsignal durchgeführt.

Das Ausgangssignal des A/D-Wandlers 22 wird einer digi- talen Datenverarbeitungseinrichtung 24 zugeführt, wel- che aus dem genannten Ausgangssignal den Drehwert der Probe errechnet und gegebenenfalls diesen durch einen ihr nachgeschalteten Plotter aufzeichnet.

Bei dem in Figur 1 dargestellten Ausführungsbeispiel steht die Durchlaßrichtung des Analysators 14 in einem Winkel von 45° zu der des Polarisators 4. Hierdurch wird ein Meßbereich von ± 45 Winkelgraden für rechts- bzw. linksdrehende optisch aktive Substanzen eröffnet. Um den Meßbereich auf einen Wertebereich von ± 90 Winkelgraden zu erweitern, ist bei dem in Figur 2 darge-

stellten Ausführungsbeispiel die Referenz-Photodiode 10 im Beugungsmaximum nullter Ordnung des Meßstrahls M angeordnet. Mit anderen Worten ist in diesem Ausführungsbeispiel der Referenzstrahl R dem vorgenannten Beugungsmaximum nullter Ordnung zugeordnet. Der Prüfstrahl P ist in diesem Ausführungsbeispiel dem Beugungsmaximum minus erster Ordnung zugeordnet. Eine dritte Photodiode, im folgenden zweite Prüf-Photodiode 26 genannt, ist - wiederum mit einem vorgeschalteten Analysator, hier dem Analysator 28,-im Beugungsmaximum plus erster Ordnung angeordnet. Der zugeordnete Prüfstrahl ist mit dem Symbol $\hat{P}$ bezeichnet. Die Durchlaßrichtungen der beiden Polarisatoren 14 und 28 schließen untereinander einen Winkel von 45° und relativ zur Durchlaßrichtung des Polarisators von ± 22,5° ein. Sie liegen demgemäß spiegelsymmetrisch zur Durchlaßrichtung des Polarisators 4.

Die weiteren in Figur 2 dargestellten Elemente sind zur Erläuterung der Meßbereichserweiterung auf ± 90° zunächst nicht erforderlich. Sie werden demgemäß später näher erläutert.

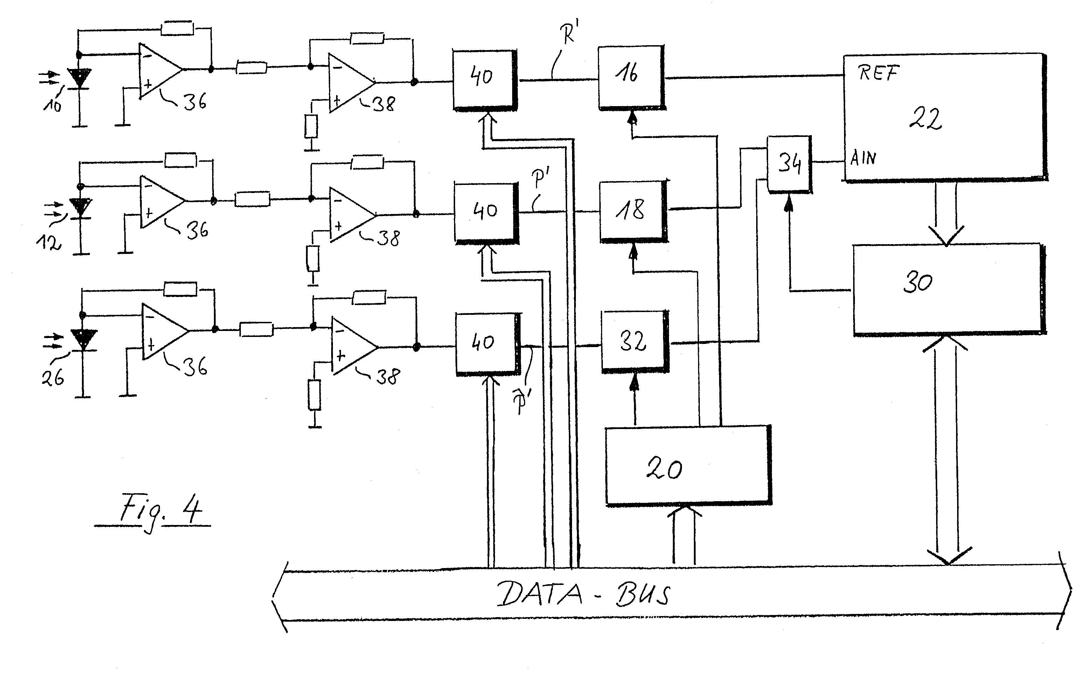

Der Vorteil des in Figur 2 bis jetzt beschriebenen Ausführungsbeispiels wird anhand der Figuren 3A und 3B erläutert. Betrachtet man die in Figur 3A graphisch dargestellte auf 1 normierte $\cos^2$-Kurve, erkennt man, daß die Funktion $\cos^2$ in einem Winkelbereich von $\frac{\pi}{8}$ bis $\frac{3}{8}\pi$ einen nahezu linearen Verlauf hat. In diesem Zusammenhang wird noch einmal an das bereits genannte Gesetz von Malus erinnert, wonach sich die Intensitäten des Lichtstrahls vor und nach dem Analysator wie die $\cos^2$-Funktion zueinander verhalten. Bei einer A/D-Wandlung der Ausgangssignale der Photodioden sind daher die Quantisierungsstufen - oder mit anderen Worten die Auflösung - im genannten Winkelbe-

reich gleichmäßig verteilt. Die Gleichmäßigkeit der Auflösung gewährleistet eine gleichmäßige Genauigkeit der Meßergebnisse und somit eine Erhöhung der Meßgenauigkeit insgesamt.

Im Ausführungsbeispiel gemäß Figur 2 wurde angegeben, daß die Durchlaßrichtung des einen Analysators im Winkel von plus 22,5° und die des anderen Analysators im Winkel von minus 22,5° zur Durchlaßrichtung des Polarisators 4 steht. Die Durchlaßfunktion des einen Analysators, beispielsweise des Analysators 14, wird durch den in Figur 3B wiedergegebenen Graph G1 und die des zweiten Analysators, beispielsweise des Analysators 28, durch den in Figur 3B wiedergegebenen Graph G2 beschrieben. Wegen der vorstehend angegebenen Winkelverhältnisse zwischen den Durchlaßrichtungen der Analysatoren und des Polarisators liegen die beiden Graphen G1 und G2 derart im Koordinatensystem, daß der Wertebereich von $\pm$ 90 Winkelgraden in vier ähnliche Teilstücke aufgeteilt werden kann, wobei jedes Teilstück 45 Winkelgrade überstreicht.

In jedem dieser vier Teilabschnitte des Wertebereiches ist nun ein nahezu linearer Kurvenabschnitt eines der zwei Graphen vorhanden. Diese Kurvenabschnitte entsprechen jeweils dem anhand der Figur 3A erläuterten Winkelbereich von $\frac{\pi}{8}$ bis $\frac{3}{8}\pi$. Hierdurch wird - wie bereits ebenfalls oben erläutert - eine angenähert identische Auflösung, nunmehr über einen Winkelbereich von $\pm$ 90°, gewährleistet.

Aus Figur 3B ergibt sich jedoch, daß jeder Graph insoweit eine mehrdeutige - genauer zweideutige Funktion - ist, als jedem Intensitätswert jedes Graphen innerhalb des genannten Meßbereiches zwei Winkelwerte zugeordnet werden können.

Zur Lösung dieses Problemes ist eine zweite Steuerschaltung 30 vorgesehen, die anhand der Figur 4 in Verbindung mit Figur 3B näher erläutert wird.

Wegen der linearen Übertragungsfunktion der Photodioden nebst nachgeschalteten Elementen werden auch die am Meßeingang AIN anstehenden möglichen Meßwerte durch eine $\cos^2$-Funktion beschrieben. Hierbei werde zunächst von einer konstanten Intensität der Lichtquelle 2 ausgegangen. Wegen der Normierung der Meßwerte auf den Referenzwert im A/D-Wandler 22 stehen an dessen mit der zweiten Steuerschaltung 30 verbundenen Signalausgang Signale an, die durch die Graphen G1 und G2 beschrieben werden. Mit anderen Worten werden der zweiten Steuerschaltung 30 die durch die Graphen G1 und G2 beschriebenen Signale zugeführt. Aus Figur 3B ergibt sich nun, daß jedem der vier (jeweils 45 Winkelgrade überstreichenden) Teilstücke des einen Graphen umkehrbar eindeutig ein Teilstück des anderen Graphen zugeordnet ist. Diese Teilstücke liegen oberhalb eines oberen Intensitätswertes $\varepsilon_o$ bzw. unterhalb eines unteren Intensitätswertes $\varepsilon_u$. Aus den Figuren 3A und 3B ergibt sich, daß der obere Intensitätswert $\varepsilon_o$ so gelegt ist, daß er die linearen Teilabschnitte von den nichtlinearen Teilabschnitten der Graphen abtrennt. Entsprechendes gilt für den unteren Intensitätswert $\varepsilon_u$. Im dargestellten Ausführungsbeispiel hat demgemäß der obere Intensitätswert $\varepsilon_o$ den Wert von $\cos^2 \frac{\pi}{8}$ und der untere Intensitätswert den Wert $1 - \cos^2 \frac{\pi}{8}$ bzw. $\cos^2 \frac{3}{8}\pi$.

Die zweite Steuerschaltung 30 weist nun wenigstens eine Vergleichsstufe auf, in welcher die Ausgangssignale des A/D-Wandlers 22 mit dem oberen und unteren Intensitätswert $\varepsilon_o$ und $\varepsilon_u$ verglichen werden. Das Ergebnis dieses Vergleiches -unter gleichzeitiger Berücksichtigung der Herkunft des normierten Meßwertes (also der Tatsache, ob der normierte Meßwert von der ersten Prüf-Photodiode 12 oder der zweiten Prüf-Photodiode 26 herrührt) - gibt eindeutig den Winkelbereich an, innerhalb dessen der momentan gemessene Drehwert liegt. Aus dem vorstehend beschriebenen Vergleich ergibt sich außerdem, welcher der den beiden Prüfstrahlen zugeordneten Werte innerhalb des durch den oberen und unteren Intensitätswert $\varepsilon_o$ und $\varepsilon_u$ eingegrenzten Bereiches liegt, mit anderen Worten also, welcher Meßwert zur Bestimmung des Drehwertes heranzuziehen ist. Dieser ausgewählte Meßwert wird dann von der zweiten Steuerschaltung 30 zur digitalen Datenverarbeitungseinrichtung 24 durchgeschaltet. Gleichzeitig wird mittels der zweiten Steuerschaltung 30 die von ihr ermittelte Information über den Drehwertbereich ebenfalls an die digitale Datenverarbeitungseinrichtung 24 weitergeleitet.

Im Ausführungsbeispiel gemäß Figur 4 ist noch ein Analogschalter 34 zur sequentiellen Durchschaltung der Ausgänge der Kurzzeitspeicher 18 und 32 an den Meßeingang AIN des A/D-Wandlers 22 vorgesehen. Der Analogschalter 34 wird seinerseits von der zweiten Steuerschaltung 30 gesteuert.

Gemäß Figur 4 werden sämtliche Photodioden in der Photoamperic-Schaltung 36 betrieben. Hierbei wird das Signal jeder Photodiode 10, 12, 26 über einen Inverter 38 einem in seiner Verstärkung programmierbaren Instrumentenverstärker 40 zugeführt. Die Ausgänge der Instrumentenverstärker 40 sind mit den Eingängen der bereits beschriebenen Kurzzeitspeicher 16, 18 bzw. 32 verbunden.

Die Steuereingänge der Instrumentenverstärker 40 sind mit der digitalen Datenverarbeitungseinrichtung 24 verbunden.

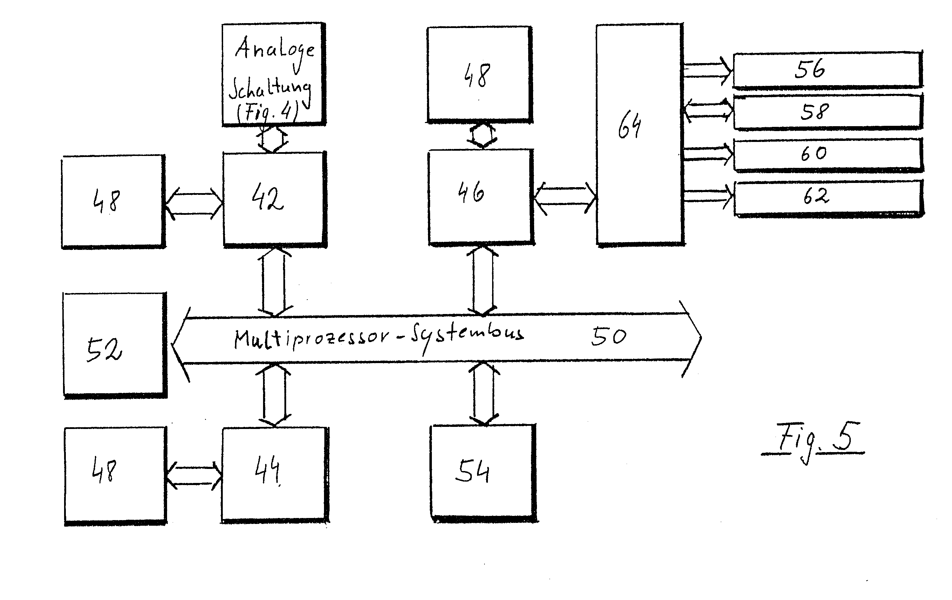

In Fig. 5 ist ein Ausführungsbeispiel für eine Ausgestaltung der digitalen Datenverarbeitungseinrichtung 24 dargestellt. Gemäß dem dargestellten Ausführungsbeispiel ist die Datenverarbeitungseinrichtung 24 als parallel arbeitendes Multiprozessorsystem ausgeführt. Der in Figur 4 dargestellte analoge Schaltungsteil ist über den lokalen Datenbus eines Datenerfassungsprozessors 42 mit der Datenverarbeitungseinrichtung 24 verbunden. Der Datenerfassungsprozessor 42 übernimmt die Erfassung der im analogen Schaltungsteil gewonnenen Daten und bereitet diese auf. Darüber hinaus liefert er sämtliche notwendigen Steuersignale für den analogen Schaltungsteil. Zur Berechnung der der Probe 6 zuordenbaren optischen Größen ist ein hardware-mäßig ausgestalteter Arithmetikprozessor 44 vorgesehen; zur Aufbereitung der Daten für eine Ausgabe an Peripheriegeräte ein Eingangs/Ausgangsprozessor 46. Jeder Prozessor 42,44,46 ist über einen lokalen Bus mit einem speziell ihm zugeordneten Programm- und Datenspeicher 48 verbunden. Über einen gemeinsamen System-Bus 50 greifen sämtliche Prozessoren auf einen gemeinsamen Datenspeicher 52 zu, in dem auszutauschende Daten enthalten sind. Eine für den Interrupt-Betrieb programmierte Echtzeituhr 54 (real time clock) steuert alle zeitrelevanten Vorgänge des Multiprozessorsystems. Die Peripheriegeräte, nämlich eine 7-Segmentanzeige 56, ein Terminal 58, ein Drucker 60 und ein Plotter 62 sind über eine Schnittstelleneinheit 64 mit dem Eingabe/Ausgabeprozessor 46 verbunden.

Wie anhand der Figur 2 erläutert worden ist, läßt sich durch eine Messung mittels eines Referenzstrahles und zweier Prüfstrahlen grundsätzlich ein, dem Betrage nach, 180 Winkelgrade überstreichender Meßbereich erfassen.

Aus Figur 6 ist jedoch ersichtlich, daß aus einer einzigen Messung nicht eindeutig hervorgeht, ob die tatsächliche Drehung in dem I. oder III. Quadranten stattgefunden hat, mit anderen Worten, ob die Polarisationsebene um einen zusätzlichen Betrag (n x 180°) links oder rechts gedreht wurde.

Der tatsächliche Drehwert läßt sich durch folgende Formel ausdrücken:

$$\beta = \gamma + n \times 180 \text{ Grad}$$

wobei gilt:

n: ganze Zahl

$\beta$: tatsächlicher Drehwert

$\gamma$: gemessener Drehwert

Um die Variable n bestimmen zu können, ist gemäß Figur 2 ein zweiter Strahlteiler 66 zwischen der Lichtquelle 2 und dem Polarisator 4 angeordnet. Mittels des zweiten Strahlteilers 66 wird aus dem Meßstrahl M ein Nebenstrahl N ausgekoppelt und über einen Spiegel 68 durch den Polarisator 4 und anschließend die Probenkammer 6 gelenkt. Der Meßstrahl M und der Nebenstrahl N laufen im dargestellten Ausführungsbeispiel parallel zueinander durch die Probenkammer 6. Der Nebenstrahl N durchläuft jedoch innerhalb der optisch aktiven Substanz eine vom Meßstrahl M unterschiedlich lange Wegstrecke, hier eine kürzere Wegstrecke. Hierzu ist im Strahlengang des Nebenstrahls N eine optisch neutrale, insbesondere optisch inaktive lichtdurchlässige Substanz vorgegebener Dicke angeordnet. Da sich die Probenkammer 6, wie später noch erläutert wird, um die optische Achse A drehen soll, ist diese Substanz als Ring 70 ausgestaltet und koaxial zum Meßstrahl M angeordnet. Im einzelnen ist hierbei der Ring 70 am Ausgangsfenster 72 der Probenkammer 6 befestigt.

Nach Durchlaufen der Probenkammer 6 trifft auch der Nebenstrahl N auf das Phasen-Transmissions-Strichgitter 8 und wird dort - wie der Meßstrahl M - ebenfalls in einen Referenzstrahl $R_N$ und zwei Prüfstrahlen $P_N$ und $\hat{P}_N$ aufgespalten. Die beiden Prüfstrahlen $P_N$ und $\hat{P}_N$ entsprechen hierbei den Beugungsmaxima $\pm$ erster Ordnung; der Referenzstrahl $R_N$ dem Beugungsmaximum nullter Ordnung. Im Beugungsmaximum nullter Ordnung des Nebenstrahls N ist wiederum eine Referenz-Photodiode $10_N$ angeordnet; in den Beugungsmaxima $\pm$ erster Ordnung des Nebenstrahls N die Prüf-Photodioden $12_N$ und $26_N$. Auch den beiden Prüf-Photodioden $12_N$, $26_N$ ist wiederum jeweils ein Analysator $14_N$ bzw. $28_N$ vorgeschaltet.

Demgemäß wird der Nebenstrahl N meßtechnisch gesehen grundsätzlich in gleicher Weise wie der Meßstrahl M behandelt. Dies trifft auch - wie in der Beschreibungseinleitung näher erläutert - für die den Photodioden des Nebenstrahls nachgeordneten Elemente der Meßschaltung zu.

Die mit dem Meß- und Nebenstrahl gemessenen Drehwerte der Probe sind direkt den von ihnen innerhalb der Probe zurückgelegten Strecken proportional. Demgemäß ist es möglich, eine Beziehung zwischen den jeweils zurückgelegten Weglängen und den tatsächlichen Drehwerten bei diesen Weglängen aufzustellen, nämlich

$$\beta_{2/L_2} = \beta_{1/L_1}$$

wobei gilt:

L1: Weglänge des Meßstrahls M in der Probe

L2: Weglänge des Nebenstrahls N in der Probe

$\beta_1$: tatsächlicher Drehwert bei der Weglänge $L_1$

$\beta_2$: tatsächlicher Drehwert bei der Weglänge $L_2$

Durch Einsetzen der o.g. allgemeinen Formel erhält man folgende Beziehung

$$\varphi 2 + n_2 \times 180° = L2 / L1 (\varphi 1 + n1 \times 180°).^*$$

Mehrdeutigkeiten treten hierbei dann auf, wenn n1 von n2 verschieden ist, d.h. wenn innerhalb der Weglänge $\Delta L = |L1 - L2|$ eine Drehung um mehr als 180° stattfindet.

Wählt man L1 und L2 so, daß eine Drehung innerhalb der Strecke $\Delta L$ 180° nicht überschreitet, dann können $n_1$ und $n_2$ einander gleichgesetzt werden, also $n_1 = n_2 =: n.$

Durch Einsetzen und Umformen der genannten Beziehungen erhält man :

$$n \times 180° = \frac{\frac{L2}{L1} \times \varphi 1 - \varphi 2}{1 - \frac{L2}{L1}}$$

Einsetzen des so erhaltenen Wertes für n ergibt dann:

$$\beta 1 = \varphi 1 + \frac{\frac{L2}{L1} \varphi 1 - \varphi 2}{1 - \frac{L2}{L1}}$$

Geht man von der Standard-Küvettenlänge der Probe von 100 mm für $L_1$ und z.B. 99 mm für $L_2$ aus, so müßte die Probe innerhalb einer Weglänge von $\Delta L = 1$ mm eine Drehung der Polarisationsebene um mehr als 180° bewirken, um eine Mehrdeutigkeit in den Meßbereich einzuführen. Da Stoffe mit derartig hohem Drehvermögen jedoch bisher nicht nachgewiesen worden sind, kann man davon ausgehen, daß mit dem oben beschriebenen

* $\varphi 1$: gemessener Drehwert bei der Länge L1

$\varphi 2$: gemessener Drehwert bei der Länge L2

Meßverfahren sämtliche Stoffe eindeutig analysiert werden können, und zwar in Echtzeit.

Bei den gegebenen Werten von $L_1$ und $L_2$ ergibt sich z.B. ein Meßbereich von maximal $\pm$ 18 000 Winkelgraden.

Bei dem in Fig. 2 dargestellten Ausführungsbeispiel ist noch ein Elektromotor 74 vorgesehen, der über ein Getriebe 76 die Probenkammer 6 in Rotation um die optische Achse versetzt. Die Probenkammer 6 ist hierbei auf vier Lagerrollen 78 gelagert, von denen jedoch nur eine vom Getriebe 76 unmittelbar gedreht wird.

Das Phasen-Transmissions-Strichgitter 8, sämtliche Photodioden und Analysatoren sind in einem evakuierbaren Isolierbehälter 80 angeordnet. Der Isolierbehälter 80 ist mit einem Vakuumventil 82 und einem Durchlaß 84 für die Meßkabel bestückt.

Gemäß Fig. 7 wird die Probenkammer 6 von einem Wärmeleitadapter 86 ummantelt, der seinerseits mit wenigstens einem Peltier-Element 88 wärmeleitend verbunden ist.

Ulrich SCHMIDT, Aachen, BRD          München, den 25.02.84
Richard DISTL, München, BRD
u.Z. : 337/3-S84 PCT
        vS/l/ob

PATENTANSPRÜCHE

1a) Mehrstrahl-Meßanordnung zur polarimetrischen Echtzeit-Untersuchung von Proben (6), bei welcher

b) ein linear polarisierter Meßstrahl (M) nach Durchlaufen der Probe (6) mittels eines ersten Strahlteilers (8) in wenigstens zwei, jeweils den gesamten Strahlquerschnitt des Meßstrahls (M) repräsentierende Teilstrahlen, nämlich einen Referenzstrahl (R) und wenigstens einen Prüfstrahl (P) aufgeteilt wird,

c) der Referenzstrahl (R) auf einen ersten photoempfindlichen Fühler (10) und der Prüfstrahl (P) auf einen zweiten photoempfindlichen Fühler (12) auftrifft,

d) dem zweiten photoempfindlichen Fühler (12) ein Analysator (14) vorgeschaltet ist, dessen Durchlaßrichtung eine vorgegebene, feste Orientierung hat, die unterschiedlich zu der des Polarisators (4) ist, und

e) die Signalausgänge (R',P') der beiden photoempfindlichen Fühler (10, 12) mit den Eingängen einer Meß-Schaltung zur Ermittlung von der Probe (6) zuordenbaren polarimetrischen Größen, insbesondere der optischen Aktivität (Drehwert) der Probe (6),verbunden sind,

dadurch gekennzeichnet, daß

f) die Meßschaltung aufweist

f.1) je einen jedem photoempfindlichen Fühler (10, 12) nachgeschalteten Kurzzeitspeicher (16, 18) mit zugeordneter erster Steuerschaltung (20) zur synchronen, kurzzeitigen Speicherung der Ausgangssignale der photoempfindlichen Fühler (10, 12)

f.2) eine verzögerungsfrei arbeitende Divisionsschaltung (22), die eingangsseitig mit den Ausgängen der Kurzzeitspeicher (16, 18) verbunden ist,

f.3) eine digitale Datenverarbeitungseinrichtung (24) zur Ausgabe der polarimetrischen Größen, die eingangsseitig mit einem Ausgang der Divisionsschaltung (22) verbunden ist, und

f.4) wenigstens einen der digitalen Datenverarbeitungseinrichtung (24) vorgeschalteten A/D-Wandler (22).

2. Mehrstrahl-Meßanordnung nach Anspruch 1, dadurch gekennzeichnet, daß die Kurzzeitspeicher (16, 18) Analogspeicher (z.B. sample & hold-Schaltungen) sind.

3. Mehrstrahl-Meßanordnung nach wenigstens einem der vorstehenden Ansprüche, dadurch gekennzeichnet, daß der A/D-Wandler (22) (auch) als Divisionsschaltung geschaltet ist und hierzu der Ausgang des dem Referenzstrahl (R) zugeordneten Kurzzeitspeichers (16) mit dem Referenzeingang (REF) und der Ausgang des dem Prüfstrahl (P) zugeordneten Kurzzeitspeichers (18) mit dem Meßeingang (AIN) des A/D-Wandlers (22) verbunden ist.

4. Mehrstrahl-Meßanordnung nach wenigstens einem der vorstehenden Ansprüche, dadurch gekennzeichnet, daß die digitale Datenverarbeitungseinrichtung (24) ein parallel arbeitendes Multiprozessor-System (mehrere datenmäßig miteinander verbundene und parallel arbeitende Mikroprozessoren) ist.

5. Mehrstrahl-Meßanordnung nach wenigstens einem der vorstehenden Ansprüche, dadurch gekennzeichnet, daß der erste Strahlteiler (8) eine Beugungseinrichtung ist.

6. Mehrstrahl-Meßanordnung nach Anspruch 5, dadurch gekennzeichnet, daß die Beugungseinrichtung eine Transmissions-Beugungseinrichtung ist.

7. Mehrstrahl-Meßanordnung nach Anspruch 5 oder 6, dadurch gekennzeichnet, daß die Beugungseinrichtung ein Gitter, insbesondere ein Strichgitter oder ein Replika davon ist.

8. Mehrstrahl-Meßanordnung nach Anspruch 7, dadurch gekennzeichnet, daß das Gitter ein Phasengitter, insbesondere ein holographisches Phasengitter ist.

9. Mehrstrahl-Meßanordnung nach wenigstens einem der Ansprüche 6 bis 8, dadurch gekennzeichnet, daß das Gitter ein holographisch hergestelltes Gitter mit Abbildungseigenschaften oder ein Replika davon ist.

10. Mehrstrahl-Meßanordnung nach wenigstens einem der Ansprüche 7 bis 9, dadurch gekennzeichnet, daß das Furchenprofil des Gitters symmetrisch zum Meßstrahl (M) angeordnet ist.

11. Mehrstrahl-Meßanordnung nach wenigstens einem der Ansprüche 5 bis 10, gekennzeichnet durch eine Trans- missions-Beugungseinrichtung (z.B. Sinusgitter) welche die Strahlungsenergie des Meßstrahls (M) im wesentlichen nur in den Beugungsmaxima der 0-ten

und plus/minus 1ten Ordnung konzentriert.

12. Mehrstrahl-Meßanordnung nach Anspruch 11, dadurch gekennzeichnet, daß der eine photoempfindliche Fühler (16;18) im Beugungsmaximum plus 1ter Ordnung und der andere photoempfindliche Fühler (18; 16) im Beugungsmaximum minus 1ter Ordnung angeordnet ist.

13. Mehrstrahl-Meßanordnung nach wenigstens einem der Ansprüche 1 bis 12, dadurch gekennzeichnet, daß

   a) der erste Strahlteiler (8) den Meßstrahl (M) in wenigstens drei, jeweils den gesamten Strahlquerschnitt des Meßstrahls (M) repräsentierende, Teilstrahlen aufteilt, nämlich den Referenzstrahl (R), den ersten Prüfstrahl (P) und einen zweiten Prüfstrahl ($\hat{P}$),

   b) der zweite Prüfstrahl ($\hat{P}$) auf einen dritten photoempfindlichen Fühler (26) mit vorgeschaltetem Analysator (28) auftrifft,

   c) die beiden Analysatoren (14, 28) untereinander unterschiedliche, feste vorgegebene Durchlaßrichtungen haben,

   d) auch dem dritten photoempfindlichen Fühler (26) ein Kurzzeitspeicher (32) nachgeschaltet ist,

   e) die den Kurzzeitspeichern (16, 18, 32) zugeordnete erste Steuerschaltung (20) zur synchronen kurzzeitigen Speicherung der Ausgangssignale aller drei photoempfindlichen Fühler (10, 12, 26) ausgelegt ist,

   f) den Kurzzeitspeichern (16, 18, 32) eine oder zwei Divisionsschaltungen (22) nachgeschaltet sind zur Bildung des Verhältnisses von wenigstens einem der beiden Werte, die in den, den Prüfstrahlen (P, $\hat{P}$) zugeordneten, Kurzzeitspeichern

(18, 32) gespeichert sind zu dem Wert, der in dem, dem Referenzstrahl (R) zugeordneten, Kurzzeitspeicher (16) gespeichert ist, und

g) eine zweite Steuerschaltung (30) vorgesehen ist zur wahlweisen Ansteuerung eines der beiden den Prüfstrahlen (P, $\hat{P}$) zugeordneten Kurzzeitspeicher (18, 32) und Durchschaltung des Ausgangswertes des ausgewählten Kurzzeitspeichers (18;32) an die digitale Datenverarbeitungseinrichtung (24), jedoch erst nach einer Normierung dieses Ausgangswertes auf die gespeicherte Intensität des Referenzstrahls (R).

14. Mehrstrahl-Meßanordnung nach Anspruch 13, dadurch gekennzeichnet, daß die zweite Steuerschaltung (30) wenigstens eine Vergleichsstufe und eine mit deren Ausgang verbundene steuerbare Schalteinrichtung aufweist, wobei die Vergleichsstufe die in den Kurzzeitspeichern (18, 32) gespeicherten Intensitäten der Prüfstrahlen (P, $\hat{P}$) - nach deren Normierung auf die gespeicherte Intensität des Referenzstrahls (R) - mit einem vorgegebenen oberen Intensitätswert $\varepsilon_O$ und einem vorgegebenen unteren Intensitätswert $\varepsilon_u$ vergleicht, - die vorgegebenen Intensitätswerte erfüllen hierbei die Beziehung $0 < \varepsilon_{u}, \varepsilon_0 < 1$ - und das gewonnene Ausgangssignal der Vergleichsstufe die Durchschaltung eines dadurch ausgewählten normierten Intensitätswertes des einen Prüfstrahls (P; $\hat{P}$) an die digitale Datenverarbeitungseinrichtung (24) steuert.

15. Mehrstrahl-Meßanordnung nach Anspruch 13 oder 14, dadurch gekennzeichnet, daß die Durchlaßrichtung des einen Analysators (14; 28) einen Winkel von 22,5° zur Durchlaßrichtung des Polarisators (4) und die Durchlaßrichtung des zweiten Analysators (28; 14) einen Winkel von 45° zur Durchlaßrichtung des ersten Analysators (14; 28) einschließt.

16. Mehrstrahl-Meßanordnung nach wenigstens einem der vorstehenden Ansprüche, dadurch gekennzeichnet, daß zur Erweiterung des Meßbereiches dem Betrage nach von mehr als 180°

a) vor der Probe (6) ein zweiter Strahlteiler (66) zur Auskopplung wenigstens eines Nebenstrahls (N) aus dem Meßstrahl (M) angeordnet ist, wobei der oder die Nebenstrahlen (N) ebenfalls die Probe (6) durchlaufen und hierbei sämtliche Nebenstrahlen (N) und der Meßstrahl (M) in der Probe (6) unterschiedliche Weglängen zurücklegen,

b) auch die Nebenstrahlen (N) vom ersten Strahlteiler (8) in jeweils einen Referenzstrahl ($R_N$) und wenigstens einen Prüfstrahl ($P_N$; $\hat{P}_N$) aufgeteilt werden,

c) auch die Referenz- und Prüfstrahlen ($R_N$, $P_N$, $\hat{P}_N$) des oder der Nebenstrahlen (N) auf ihnen zugeordnete photoempfindliche Fühler ($10_N$, $12_N$, $26_N$) treffen,

d) in der Meßschaltung wenigstens jedem der – den Referenz- und Prüfstrahlen des Nebenstrahls (N) zugeordneten – photoempfindlichen Fühler ($10_N$, $12_N$, $26_N$) ein Kurzzeitspeicher nachgeschaltet ist und

e) die digitale Datenverarbeitungseinrichtung (24) hierbei auch zur Berechnung des (oder der) dem (oder den) Nebenstrahl(en) (N) zugeordneten Drehwert(en) ($\varphi 2$) und Verknüpfung der somit gewonnenen Daten mit den dem Meßstrahl (M) zugeordneten Drehwert ($\varphi 1$) ausgelegt ist.

17. Mehrstrahl-Meßanordnung nach wenigstens einem der vorstehenden Ansprüche, dadurch gekennzeichnet, daß in der digitalen Datenverarbeitungseinrichtung (24) eine Echtzeit-Uhr (54) vorgesehen ist.

18. Mehrstrahl-Meßanordnung nach wenigstens einem der vorstehenden Ansprüche, dadurch gekennzeichnet, daß vor dem A/D-Wandler (22) wenigstens ein in der Verstärkung programmierbarer Instrumentenverstärker (40) angeordnet ist.

19. Mehrstrahl-Meßanordnung nach wenigstens einem der vorstehenden Ansprüche, dadurch gekennzeichnet, daß an der digitalen Datenverarbeitungseinrichtung (24) eine Schnittstelleneinheit (64) für eine Rechner-Rechner-Kopplung (z.B. Local Area Network-Interface) vorgesehen ist.

20. Mehrstrahl-Meßanordnung nach wenigstens einem der vorstehenden Ansprüche, dadurch gekennzeichnet, daß die digitale Datenverarbeitungseinrichtung (24) einen Anschluß für eine Ein- und Ausgabeeinheit (58) und/oder einen Meßwertdrucker (60) bzw. einen Plotter (62) aufweist.

21. Mehrstrahl-Meßanordnung nach wenigstens einem der vorstehenden Ansprüche, dadurch gekennzeichnet, daß die Lichtquelle (2) ein Gaslaser, ggf. mit Farbstoffvorsatz ist.

22. Mehrstrahl-Meßanordnung nach wenigstens einem der Ansprüche 1 bis 20, dadurch gekennzeichnet, daß die Lichtquelle (2) ein Halbleiter-Laser ist.

23. Mehrstrahl-Meßanordnung nach wenigstens einem der Ansprüche 1 bis 20, dadurch gekennzeichnet, daß die Lichtquelle (2) eine Weißlichtquelle mit nachgeschaltetem akusto-optisch abstimmbaren Filter ist.

24. Mehrstrahl-Meßanordnung nach Anspruch 23, dadurch gekennzeichnet, daß der Steuereingang des akusto-optisch abstimmbaren Filters mit einem Steuerausgang der digitalen Datenverarbeitungseinrichtung (24) verbunden ist.

25. Mehrstrahl-Meßanordnung nach wenigstens einem der vorstehenden Ansprüche, gekennzeichnet durch ein oder mehrere Peltier-Elemente (88) zur Steuerung der Temperatur wenigstens eines Elementes der Meßanordnung (z.B. der Probenkammer 6).

26. Mehrstrahl-Meßanordnung nach Anspruch 25, dadurch gekennzeichnet, daß das oder die Peltierelemente (88) elektrisch mit einem Steuerausgang der digitalen Datenverarbeitungseinrichtung (24) verbunden sind.

27. Mehrstrahl-Meßanordnung nach wenigstens einem der vorstehenden Ansprüche, gekennzeichnet durch eine Einrichtung (74, 76, 78) zur Rotation der Probenkammer (6) um die optische Achse (A).

28. Mehrstrahl-Meßanordnung nach wenigstens einem der vorstehenden Ansprüche, dadurch gekennzeichnet, daß der erste Strahlteiler (8), sämtliche Analysatoren (14, $14_N$, 28, $28_N$) und sämtliche photoempfindlichen Fühler (10, $10_N$, 12, $12_N$, 26, $26_N$) in einem evakuierbaren Isolierbehälter (80) eingeschlossen sind.

29. a) Mehrstrahl-Meßanordnung zur polarimetrischen Untersuchung von Proben (6), bei welcher

b) ein linear polarisierter Meßstrahl (M) nach Durchlaufen der Probe (6) mittels eines ersten Strahlteilers (8) in wenigstens zwei, jeweils den gesamten Strahlquerschnitt des Meßstrahls (M) repräsentierende Teilstrahlen, nämlich einen Referenzstrahl (R) und wenigstens einen Prüfstrahl (P) aufgeteilt wird,

c) der Referenzstrahl (R) auf einen ersten photoempfindlichen Fühler (10) und der Prüfstrahl (P) auf einen zweiten photoempfindlichen Fühler (12) auftrifft,

d) dem zweiten photoempfindlichen Fühler (12) ein Analysator (14) vorgeschaltet ist, dessen Durchlaßrichtung eine vorgegebene, feste Orientierung hat, die unterschiedlich zu der des Polarisators (4) ist, und

e) die Signalausgänge (R',P') der beiden photoempfindlichen Fühler (10, 12) mit den Eingängen einer Meßschaltung zur Ermittlung von der Probe (6) zuordenbaren polarimetrischen Größen, insbesondere der optischen Aktivität (Drehwert) der Probe (6) verbunden sind, insbesondere nach einem der vorstehenden Ansprüche, dadurch gekennzeichnet, daß

f) der erste Strahlteiler (8) eine Beugungsrichtung ist.

30. a) Mehrstrahl-Meßanordnung zur polarimetrischen Echtzeit-Untersuchung von Proben (6), bei welcher

b) ein linear polarisierter Meßstrahl (M) nach Durchlaufen der Probe (6) mittels eines ersten Strahlteilers (8) in wenigstens zwei, jeweils den gesamten Strahlquerschnitt des Meßstrahl (M) repräsentierende Teilstrahlen, nämlich einen Referenzstrahl (R) und wenigstens einen Prüfstrahl (P) aufgeteilt wird,

c) der Referenzstrahl (R) auf einen ersten photoempfindlichen Fühler (10) und der Prüfstrahl (P) auf einen zweiten photoempfindlichen Fühler (12) auftrifft,

d) dem zweiten photoempfindlichen Fühler (12) ein Analysator (14) vorgeschaltet ist, dessen Durchlaßrichtung eine vorgegebene, feste Orientierung hat, die unterschiedlich zu der des Polarisators (4) ist, und

e) die Signalausgänge (R',P') der beiden photoempfindlichen Fühler (10) und (12) mit den Eingängen einer Meßschaltung zur Ermittlung von der Probe (6) zuordenbaren polarimetrischen Größen, insbesondere der optischen Aktivität (Drehwert) der Probe (6) verbunden sind, insbesondere nach einem der Ansprüche 1 bis 28, dadurch gekennzeichnet, daß

f) der erste Strahlteiler (8) den Meßstrahl (M) in wenigstens drei, jeweils den gesamten Strahlquerschnitt des Meßstrahls (M) repräsentierende Teilstrahlen aufteilt, nämlich den Referenzstrahl (R), den ersten Prüfstrahl (P) und einen zweiten Prüfstrahl (P̂),

g) der zweite Prüfstrahl (P̂) auf einen dritten photoempfindlichen Fühler (26) mit vorgeschaltetem Analysator (28) auftrifft und

h) die beiden Analysatoren (14, 28) untereinander unterschiedliche, feste vorgegebene Durchlaßrichtungen haben.

31. Mehrstrahl-Meßanordnung nach wenigstens einem der vorstehenden Ansprüche, dadurch gekennzeichnet, daß zur Bestimmung von der Probe (6) zuordenbaren photometrischen Größen eine Einrichtung zur wahlweisen direkten Verbindung des Ausgangs des dem Referenzstrahl (R) zugeordneten photoempfindlichen Fühlers (10) mit dem Meßeingang (AIN) und einer Konstantspannungsquelle mit dem Referenzeingang (REF) des A/D-Wandlers (22) und Ausblendung der übrigen Signale vom Meßeingang (AIN) des A/D-Wandlers (22) vorgesehen ist.

Fig. 1

Fig. 3A

Intensität $A/A_0$

Winkel $\varphi$

Fig. 6

Fig. 3B

Fig. 7

Fig. 2

Fig. 4

DATA - BUS

Fig. 5

Analoge Schaltung (Fig. 4)

Multiprozessor - Systembus    50

0123057

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | EP-A-0 030 610 (A. MÜLLER)<br><br>* Seiten 9-11,14,15,17,19; Figuren 2,8 * | 1,20-22 | G 01 N 21/21 |
| A,D | FR-A-2 393 296 (A. MÜLLER)<br>* Seiten 4,5; Figuren 2-4 * | 1 | |
| A,D | US-A-3 724 957 (T. TAMATE et al.)<br>* Spalten 1,6,7; Figuren 1,9 * | 1 | |
| A,D | DE-A-2 513 937 (F. SCHMIDT & HAENSCH)<br>* Seiten 3,4; Figur 4 * | 1 | |
| A | REVIEW OF SCIENTIFIC INSTRUMENTS, Band 52, Nr. 9, September 1981, Seiten 1311-1316, New York, USA; M. HATANO et al.: "New type of rapid scanning circular dichroism spectropolarimeter using an acoustic optical filter"<br>* Seiten 1312-1313 * | 23,24 | RECHERCHIERTE SACHGEBIETE (Int. Cl. 3)<br><br>G 01 N 21/21<br>G 01 J 4/04<br>G 01 J 4/00<br>G 01 N 21/19<br>G 02 B 27/10<br>G 01 J 1/16<br>G 01 J 1/18 |

-/-

Der vorliegende Recherchenbericht wurde für alle Patentansprüche erstellt.

| Recherchenort<br>DEN HAAG | Abschlußdatum der Recherche<br>20-06-1984 | Prüfer<br>BOEHM CH.E.D. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | JOURNAL OF PHYSICS E: SCIENTIFIC INSTRUMENTS, Band 3, 1970, Seiten 690-694; A.M. ASHTON et al.: "The use of double-beam detection systems with pulsed sources of vacuum ultraviolet radiation" * Seite 693 * | 1,2 | |
| A | JOURNAL OF PHYSICS E: SCIENTIFIC INSTRUMENTS, Band 3, Nr. 3, März 1970, Seiten 229-233; J. HODBY: "A ratio-measuring detection system for use in pulsed spectroscopic measurements" * Seiten 230-231 * | 1,2 | |
| A | US-A-4 266 554  (K. HAMAGURI) * Spalten 4,5; Figur 2 * | 1,2,4 | |
| A | US-A-3 646 331  (J. LORD) * Spalte 3; Figur 1 * | 3 | RECHERCHIERTE SACHGEBIETE (Int. Cl. 3) |
| A,P D | EP-A-0 091 068  (FIRMA CARL ZEISS) * Seite 2, Figur 1 * | 5-7,10 | |

Der vorliegende Recherchenbericht wurde für alle Patentansprüche erstellt.

| Recherchenort DEN HAAG | Abschlußdatum der Recherche 20-06-1984 | Prüfer BOEHM CH.E.D. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03.82